# EUROPEAN PATENT APPLICATION

(11) **EP 3 372 820 A1**
(43) Date of publication of application: **12.09.2018**
(21) Application number: 16861938.5
(22) Date of filing: 20.10.2016
(51) Int. Cl.: F02K 9/62

(54) **COMBUSTOR AND ROCKET ENGINE**

(30) Priority: 02.11.2015 JP 2015215975
(71) Applicant: Mitsubishi Heavy Industries, Ltd., Tokyo 108-8215 (JP)
(72) Inventor: ISONO, Mitsunori, Tokyo 108-8215 (JP); MANAKO, Hiroyasu, Tokyo 108-8215 (JP); WATANABE, Shinichiro, Tokyo 108-8215 (JP); KAWASHIMA, Hideto, Tsukuba-shi Ibaraki 305-8505 (JP)
(74) Representative: Henkel, Breuer & Partner
(86) International application number: PCT/JP2016/081163
(87) International publication number: WO 2017/077874

(57) **Abstract**

A combustor and rocket engine which are equipped with: an injection device (11) for injecting fuel and an oxidizer from an injection surface (23); a combustion chamber (12) for generating a combustion gas by combusting the fuel and the oxidizer which are injected by the injection device (11); a resonator (31) that is connected to the combustion chamber (12) via a connection channel (35); and a porous plate (41) provided in the connection channel (35).

## Description

### Field

The present invention relates to a combustor used for a rocket engine that obtains propulsive force by mixing and burning an oxidizing agent and fuel, and a rocket engine to which the combustor is applied.

### Background

A rocket combustor to be installed in a rocket engine includes a plurality of injectors, a combustion chamber, a nozzle, and the like. The rocket combustor obtains propulsive force by converting energy derived from chemical reaction of fuel, which is also propellant, to exhaust movement. In other words, in the rocket combustor, the propulsive force is generated by injecting fuel (for example, hydrogen gas: GH₂) and an oxidizing agent (for example, liquid oxygen: LOx) into the combustion chamber from the injector; increasing the combustion gas, which is generated in the combustion chamber after the fuel and the oxidizing agent are ignited, by the nozzle; and discharging the combustion gas in the combustion gas discharging direction.

For example, the following Patent Literatures disclose such a rocket combustor.

### Citation List

### Patent Literature

Patent Literature 1: Japanese Patent Application Laid-open No. 2008-202542
Patent Literature 2: Japanese Patent Application Laid-open No. 2014-037838

### Summary

### Technical Problem

A rocket engine has a natural frequency of the air column according to the length and the diameter of the combustion chamber, and pressure fluctuation (air column vibration) is generated during combustion. Thus, a resonator is provided to suppress the pressure oscillation during combustion. When sound waves having a frequency around the resonance frequency enter the entrance of the resonator, large oscillations occur in the resonator, and friction is generated at the entrance part. Due to the energy loss, the resonator can reduce the pressure fluctuation. However, due to limitations in weight and space, space for installing the resonator is limited in the rocket engine. Thus, it is difficult to adjust the volume and the entrance length of the resonator relative to the area where the pressure oscillation is generated.

The present invention has been made to solve the above-mentioned problems, and an object of the present invention is to provide a combustor and a rocket engine capable of suppressing the size and weight from being increased while suppressing the generation of combustion oscillation.

### Solution to Problem

To achieve the object, a combustor includes an injection device configured to inject an oxidizing agent and fuel from an injecting surface, a combustion chamber configured to generate combustion gas by burning the oxidizing agent and the fuel injected from the injection device, a resonator communicatively connected with the combustion chamber via a communication passage, and a perforated plate provided in the communication passage.

Consequently, when the injection device injects an oxidizing agent and fuel into the combustion chamber, and the oxidizing agent and the fuel are burnt in the combustion chamber, combustion gas is generated. In this process, the combustion chamber has a natural frequency of the air column according to the length and the diameter, and pressure fluctuation of a predetermined frequency is generated during combustion. However, the pressure fluctuation is reduced by the resonator. In this case, it is possible to adjust the sound absorbable frequency band of the resonator, by providing the perforated plate in the communication passage of the resonator, and by adjusting the aperture ratio of the perforated plate without changing the volume of the resonator. As a result, it is possible to suppress the size and weight of the resonator from being increased, while suppressing the generation of combustion oscillation.

In the combustor of the present invention, the perforated plate is disposed to face the combustion chamber on a side of the combustion chamber in the communication passage.

Consequently, the perforated plate can suppress the combustion gas from flowing into the resonator from the combustion chamber through the communication passage. Thus, it is possible to prevent the resonator from being damaged.

In the combustor of the present invention, a plurality of the resonators are spaced apart at predetermined intervals in a circumferential direction, and the perforated plate is provided in the communication passage in each of the resonators.

Consequently, the resonators can suitably absorb the pressure fluctuation generated in the combustion chamber.

In the combustor of the present invention, a plurality of the perforated plates have different aperture ratios.

Consequently, it is possible to secure a plurality of sound absorbable frequency bands of the resonators and improve the performance of the resonators, by making the aperture ratio of each of the perforated plates to be different.

In the combustor of the present invention, the plurality of the resonators have a same external shape and different volumes.

Consequently, it is possible to secure a plurality of sound absorbable frequency bands of the resonators and improve the performance of the resonators, by making the volume of each of the resonators to be different.

In the combustor of the present invention, a stepped hole is formed on the perforated plate.

Consequently, it is possible to increase the sound absorbable frequency bands of the resonators and improve the performance of the resonators, by forming the stepped hole on the perforated plate.

In the combustor of the present invention, a plurality of the perforated plates are disposed in a communicating direction in the communication passage at predetermined intervals.

Consequently, it is possible to adjust the sound absorbable frequency band of the resonator at a high accuracy and improve the performance of the resonator, by disposing the perforated plates in the communication passage.

A rocket engine of the present invention includes the combustor, an oxidizing agent supply device configured to supply an oxidizing agent to the combustor, and a fuel supply device configured to supply fuel to the combustor.

Consequently, it is possible to adjust the sound absorbable frequency band of the resonator by adjusting the aperture ratio of the perforated plate without changing the volume of the resonator, and suppress the size and weight of the resonator from being increased while suppressing the generation of combustion oscillation. As a result, it is possible to improve the performance.

### Advantageous Effects of Invention

With the combustor and the rocket engine of the present invention, the resonator is communicatively connected with the combustion chamber via the communication passage, and the perforated plate is provided in the communication passage. Consequently, it is possible to adjust the sound absorbable frequency band of the resonator by adjusting the aperture ratio of the perforated plate, and suppress the size and weight of the resonator from being increased while suppressing the generation of combustion oscillation.

### Brief Description of Drawings

FIG. 1 is a schematic diagram illustrating a combustor of a first embodiment.
FIG. 2 is a layout view of a resonator attached to the combustor.
FIG. 3 is a sectional view of the resonator attached to the combustor.
FIG. 4 is a front view of the resonator.
FIG. 5 is a graph representing the sound absorption coefficients with respect to the frequencies of a plurality of aperture ratios.
FIG. 6 is a sectional view of a resonator attached to a combustor of a second embodiment.
FIG. 7 is a sectional view of a resonator attached to a combustor of a third embodiment.
FIG. 8-1 is a sectional view of a resonator attached to a combustor of a fourth embodiment.
FIG. 8-2 is a sectional view of another resonator attached to the combustor.

### Description of Embodiments

Hereinafter, preferred embodiments of a combustor and a rocket engine according to the present invention will be described in detail with reference to the accompanying drawings. It is to be noted that the present invention is not limited to the embodiments, and when there are multiple embodiments, the respective embodiments may be suitably combined.

### First Embodiment

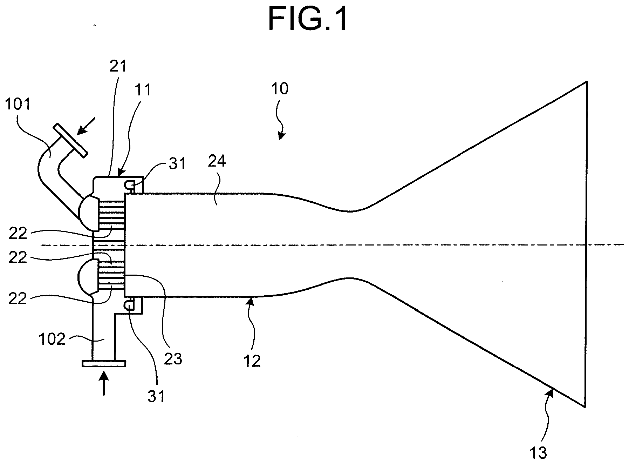

FIG. 1 is a schematic diagram illustrating a combustor of a first embodiment.

In the first embodiment, as illustrated in FIG. 1, a combustor 10 includes an injection device 11, a combustion chamber 12, and a nozzle 13. The combustor 10 obtains propulsive force by converting energy derived from chemical reaction of fuel, which is also propellant, to exhaust movement. In other words, the propulsive force is obtained by mixing and burning the liquid oxygen and the hydrogen gas injected toward the combustion chamber 12 from the injection device 11 in the combustion chamber 12, generating combustion gas, and injecting the combustion gas injected from the combustion chamber 12 through the nozzle 13.

In the injection device 11, a plurality of injectors 22 are arranged in an injection device main body 21. Each of the injectors 22 can inject fuel and an oxidizing agent into the combustion chamber 12 from an injecting surface 23. Although not illustrated, the injector 22 includes an internal cylinder and an external cylinder. An oxidizing agent flow passage is formed in the internal cylinder, and the injector 22 injects the oxidizing agent supplied from an oxidizing agent supply line 102 toward the combustion chamber 12. The external cylinder covers the outer peripheral surface of the internal cylinder. Thus, a fuel flow passage is formed between the internal cylinder and the external cylinder. The injector 22 injects the fuel supplied from a fuel supply line 101 toward the combustion chamber 12.

The combustion chamber 12 is used for burning the liquid oxygen and the hydrogen gas injected from the injectors 22. The liquid oxygen and the hydrogen gas injected from the injectors 22 are atomized in the combustion chamber 12, and are mixed and burned. The combustion chamber 12 has a peripheral wall 24 formed in a cylinder shape. The peripheral wall 24 defines the inside of the combustion chamber 12 when the inner circumferential surface of the peripheral wall 24 becomes orthogonal to the injecting surface 23.

The injecting surface 23 is a surface that injects the liquid oxygen and the hydrogen gas into the combustion chamber 12, and is formed in a circular shape. Injection ports of the injectors 22 are exposed on the surface of the injecting surface 23. The injectors 22 (injection ports) are concentrically disposed relative to the injecting surface 23, and are arranged in the radial direction of the injecting surface 23. The injecting surface 23 is provided on an end portion of the peripheral wall 24 in the axial direction (longitudinal direction), and the nozzle 13 is provided on the other end of the peripheral wall 24. In the combustion chamber 12, a cooling passage (not illustrated) is provided on the peripheral wall 24.

The inner diameter of the combustion chamber 12 is substantially constant. The nozzle 13 is continuously formed with the peripheral wall 24 of the combustion chamber 12, and the inside of the nozzle 13 is communicatively connected with the combustion chamber 12. The nozzle 13 obtains propulsive force by injecting the combustion gas generated in the combustion chamber 12.

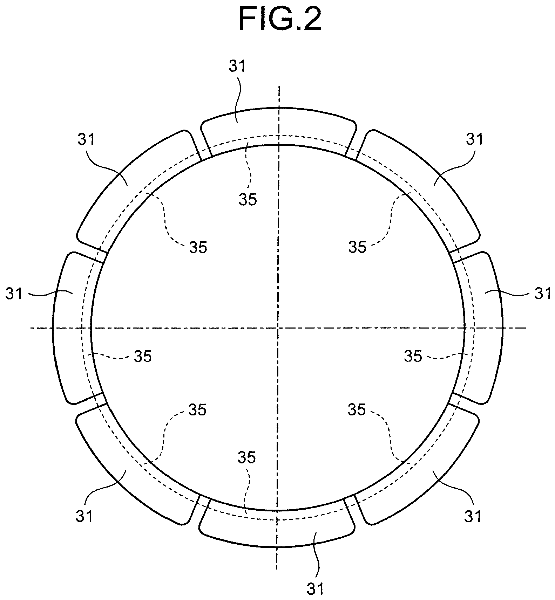

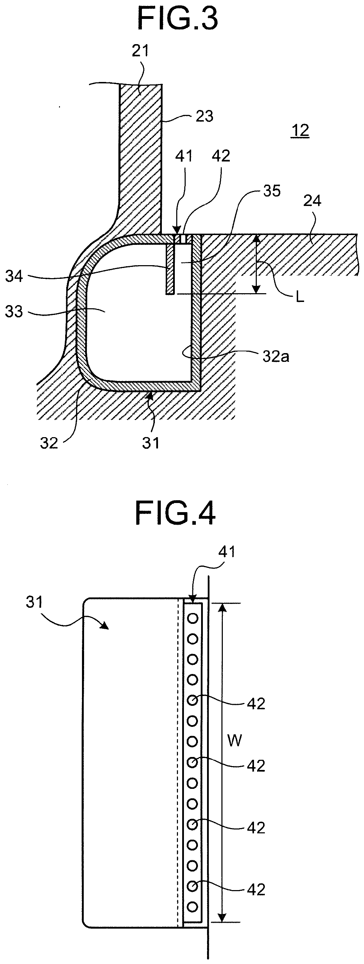

A resonator 31 that suppresses the combustion oscillation is provided in the combustor 10. FIG. 2 is a layout view of a resonator attached to the combustor. FIG. 3 is a sectional view of the resonator attached to the combustor. FIG. 4 is a front view of the resonator.

As illustrated in FIG. 1 and FIG. 2, the resonator 31 is disposed at the outside of the combustion chamber 12 in the injection device main body 21, and a plurality (eight in the present embodiment) of the resonators 31 are spaced apart at predetermined intervals in the circumferential direction of the injection device main body 21. In other words, as illustrated in FIG. 3 and FIG. 4, the resonator 31 is a space portion 33 formed by a frame 32, and a communication passage 35 is formed by a guide plate 34. The guide plate 34 is separated from a flat part 32a of the frame 32 at a fixed distance, and is disposed in parallel with the flat part 32a. Hence, the communication passage 35 has the same width W and the predetermined length L as those of the frame 32, and has the same passage section area along the communicating direction. The space portion 33 of the resonator 31 is communicatively connected with the combustion chamber 12 via the communication passage 35.

A perforated plate 41 is provided in the communication passage 35 of the resonator 31. A plurality of communication holes 42 are formed on the perforated plate 41. The perforated plate 41 is disposed on the combustion chamber 12 side in the communication passage 35, and faces the combustion chamber 12. In other words, the external surface of the perforated plate 41 and the inner peripheral surface of the peripheral wall 24 of the combustion chamber 12 are continuous surfaces without a step.

As described above, the resonators 31 are provided along the circumferential direction of the injection device 11, and the perforated plate 41 is provided in the communication passage 35 of each of the resonators 31.

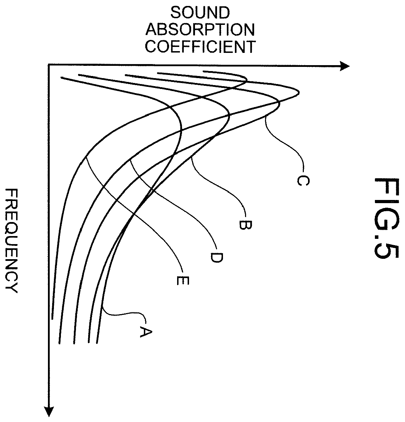

In this case, the aperture ratio of the perforated plate 41 is adjusted according to the plate thickness of the perforated plate 41, and the number and inner diameter of each of the communication holes 42. The aperture ratio is set according to the frequency of the combustion oscillation generated in the combustion chamber 12 of the combustor 10. FIG. 5 is a graph representing the sound absorption coefficients with respect to the frequencies of a plurality of aperture ratios. The graph in FIG. 5 is a graph representing the sound absorption coefficients with respect to the frequency of combustion oscillation. The aperture ratio of A is 30%, the aperture ratio of B is 20%, the aperture ratio of C is 10%, the aperture ratio of D is 6%, and the aperture ratio of E is 2.5%. As is evident from the graph, the sound absorbable frequency band is reduced with reduction in the aperture ratio of the perforated plate 41. However, the sound absorption coefficient is increased with reduction in the aperture ratio of the perforated plate 41. Consequently, the resonator 31 can suitably suppress the combustion oscillation generated in the combustion chamber 12, by setting the aperture ratio of the perforated plate 41 according to the frequency of combustion oscillation generated in the combustion chamber 12.

In this manner, the combustor of the first embodiment includes the injection device 11 that injects an oxidizing agent and fuel from the injecting surface 23, the combustion chamber 12 that generates combustion gas by burning the oxidizing agent and the fuel injected from the injection device 11, the resonator 31 communicatively connected with the combustion chamber 12 via the communication passage 35, and the perforated plate 41 provided in the communication passage 35.

Consequently, when the injection device 11 injects an oxidizing agent and fuel into the combustion chamber 12, and the oxidizing agent and the fuel are burnt in the combustion chamber 12, combustion gas is generated. In this process, the combustion chamber 12 has a natural frequency of the air column according to the length and the diameter, and pressure fluctuation of a predetermined frequency is generated during combustion. However, the pressure fluctuation is reduced by the resonator 31. In this case, it is possible to adjust the sound absorbable frequency band of the resonator 31, by providing the perforated plate 41 in the communication passage 35 of the resonator 31, and by adjusting the aperture ratio of the perforated plate 41 without changing the volume of the resonator 31. As a result, it is possible to suppress the size and weight of the resonator 31 from being increased, while suppressing the generation of combustion oscillation.

In the combustor of the first embodiment, the perforated plate 41 is disposed on the combustion chamber 12 side in the communication passage 35, and faces the combustion chamber 12. Consequently, the perforated plate 41 can suppress the combustion gas from flowing into the resonator 31 from the combustion chamber 12 through the communication passage 35. Thus, it is possible to prevent the resonator 31 from being damaged.

In the combustor of the first embodiment, the resonators 31 are spaced apart at predetermined intervals in the circumferential direction of the injection device 11, and the perforated plate 41 is provided in the communication passage 35 of each of the resonators 31. Consequently, the resonators 31 can suitably absorb the pressure fluctuation generated in the combustion chamber 12.

The combustor 10 is applied to the rocket engine of the first embodiment. Thus, it is possible to adjust the sound absorbable frequency band of the resonator 31 by adjusting the aperture ratio of the perforated plate 41, without changing the volume of the resonator 31. Consequently, it is possible to suppress the size and weight of the resonator 31 from being increased, while suppressing the generation of combustion oscillation. As a result, it is possible to improve the performance of the resonator 31.

### Second Embodiment

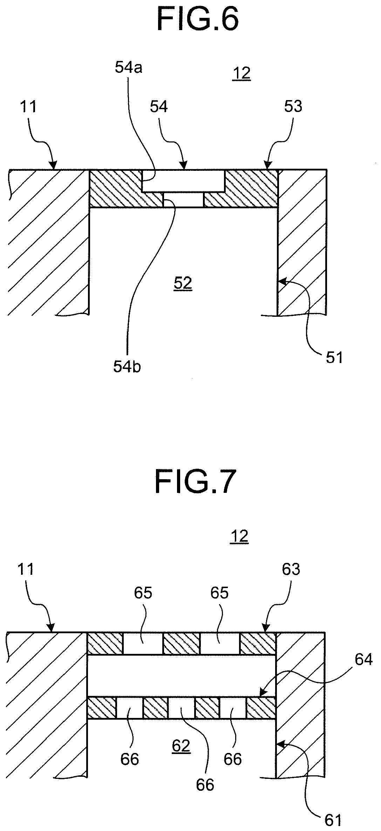

FIG. 6 is a sectional view of a resonator attached to a combustor of a second embodiment. The same reference numerals denote the same components that have the same functions as those in the embodiment described above, and the detailed descriptions thereof are omitted.

In the second embodiment, as illustrated in FIG. 6, a resonator 51 that suppresses the combustion oscillation is provided in the injection device 11. The resonator 51 is communicatively connected with the combustion chamber 12 via a communication passage 52. A perforated plate 53 is provided in the communication passage 52 of the resonator 51. A plurality of communication holes 54 are formed on the perforated plate 53, and each of the communication holes 54 is a stepped hole. In other words, the communication hole 54 is a hole in which a large diameter hole 54a and a small diameter hole 54b, which are concentrically formed, are formed in a continuous manner. In this case, the large diameter hole 54a is placed at the combustion chamber 12 side.

In this manner, in the combustor of the second embodiment, the perforated plate 53 is provided in the communication passage 52 of the resonator 51, the communication holes 54 are formed on the perforated plate 53, and each of the communication holes 54 is a stepped hole. Consequently, it is possible to increase the sound absorbable frequency band of the resonator 51, and improve the performance of the resonator 51.

### Third Embodiment

FIG. 7 is a sectional view of a resonator attached to a combustor of a third embodiment. The same reference numerals denote the same components that have the same functions as those in the embodiment described above, and the detailed descriptions thereof are omitted.

In the third embodiment, as illustrated in FIG. 7, a resonator 61 that suppresses the combustion oscillation is provided in the injection device 11. The resonator 61 is communicatively connected with the combustion chamber 12 via a communication passage 62. In the resonator 61, a plurality (two in the present embodiment) of perforated plates 63 and 64 are provided in the communication passage 62. The perforated plates 63 and 64 are spaced apart in the communication passage 62 at predetermined intervals in the communicating direction. Communication holes 65 and 66 are respectively formed on the perforated plates 63 and 64, and the inner diameters, the numbers, and the positions of the communication holes 65 and 66 are different from each other. As a result, the aperture ratios of the perforated plates 63 and 64 are different from each other.

In this manner, in the combustor of the third embodiment, the perforated plates 63 and 64 are provided in the communication passage 62 of the resonator 61, and the perforated plates 63 and 64 are spaced apart at predetermined intervals in the communicating direction in the communication passage 62. Consequently, it is possible to increase the sound absorbable frequency band of the resonator 61, and improve the performance of the resonator 61.

### Fourth Embodiment

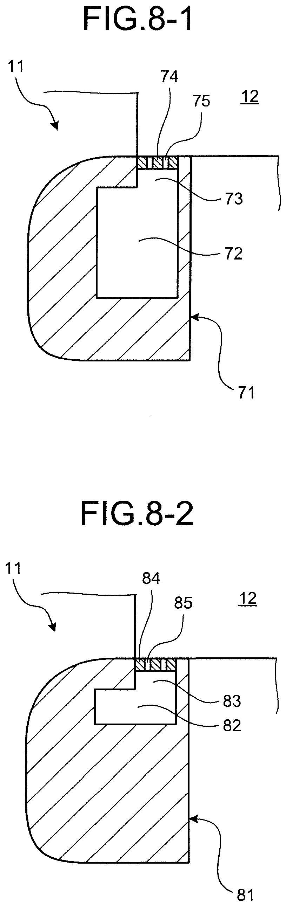

FIG. 8-1 is a sectional view of a resonator attached to a combustor of a fourth embodiment. FIG. 8-2 is a sectional view of another resonator attached to the combustor. The same reference numerals denote the same components that have the same functions as those in the embodiment described above, and the detailed descriptions thereof are omitted.

In the fourth embodiment, as illustrated in FIG. 8-1 and FIG. 8-2, a plurality (for example, eight as illustrated in FIG. 2) of resonators 71 and 81 that suppress the combustion oscillation are provided in the circumferential direction in the injection device 11. The resonators 71 and 81 are alternatively disposed in the circumferential direction of the injection device 11, and although the external shape of the resonators 71 and 81 is the same, the volumes thereof are different.

In other words, as illustrated in FIG. 9-1, the resonator 71 is a space portion 72 that has a large volume and is communicatively connected with the combustion chamber 12 via a communication passage 73. In the resonator 71, a perforated plate 74 is provided in the communication passage 73, and a plurality of communication holes 75 are formed on the perforated plate 74. On the other hand, as illustrated in FIG. 9-2, the resonator 81 is a space portion 82 that has a small volume, and is communicatively connected with the combustion chamber 12 via a communication passage 83. In the resonator 81, a perforated plate 84 is provided in the communication passage 83, and a plurality of communication holes 85 are formed on the perforated plate 84.

As illustrated in FIG. 9-1 and FIG. 9-2, in the resonators 71 and 81, the sound absorbable frequency bands of the combustion oscillation are different, because the volume of the space portion 82 is different. Thus, it is possible to suppress the combustion oscillation of the frequency bands. In this case, the number of different resonators 71 and 81 are not limited to two, but it is also possible to provide three or more resonators 71 and 81.

In this manner, in the combustor of the fourth embodiment, the outer diameters of the resonators 71 and 81 are made the same, and the volumes of the space portions 72 and 82 are made different. Consequently, it is possible to secure a plurality of sound absorbable frequency bands of the resonators 71 and 81, and improve the performance of the resonators 71 and 81.

In the above description, the sound absorbable frequency bands are secured by providing the resonators 71 and 81 having different volumes. However, the configuration is not limited thereto. For example, the volumes of the space portions of the resonators may be made the same, and the aperture ratios of the perforated plates provided in the communication passages may be made different. Even in this case, it is possible to secure the sound absorbable frequency bands of the resonators, and improve the performance of the resonators. Reference Signs List

10 combustor
11 injection device
12 combustion chamber
13 nozzle
21 injection device main body
22 injector
23 injecting surface
24 peripheral wall
31, 51, 61, 71, 81 resonator
32 frame
33, 72, 82 space portion
34 guide plate
35, 52, 62, 73, 83 communication passage
41, 53, 63, 64, 74, 84 perforated plate
42, 54, 65, 66, 75, 85 communication hole
101 fuel supply line
102 oxidizing agent supply line

## Claims

1. A combustor comprising:
an injection device configured to inject an oxidizing agent and fuel from an injecting surface;
a combustion chamber configured to generate combustion gas by burning the oxidizing agent and the fuel injected from the injection device;
a resonator communicatively connected with the combustion chamber via a communication passage; and
a perforated plate provided in the communication passage.

2. The combustor according to claim 1, wherein the perforated plate is disposed to face the combustion chamber on a side of the combustion chamber in the communication passage.

3. The combustor according to claim 2, wherein a plurality of the resonators are spaced apart at predetermined intervals in a circumferential direction, and the perforated plate is provided in the communication passage in each of the resonators.

4. The combustor according to claim 3, wherein a plurality of the perforated plates have different aperture ratios.

5. The combustor according to claim 3 or 4, wherein the plurality of the resonators have a same external shape and different volumes.

6. The combustor according to any one of claims 1 to 5, wherein a stepped hole is formed on the perforated plate.

7. The combustor according to any one of claims 1 to 6, wherein a plurality of the perforated plates are disposed in a communicating direction in the communication passage at predetermined intervals.

8. A rocket engine comprising:
the combustor according to any one of claims 1 to 7;
an oxidizing agent supply device configured to supply an oxidizing agent to the combustor; and
a fuel supply device configured to supply fuel to the combustor.
